# EUROPEAN PATENT APPLICATION

(11) **EP 3 871 954 A1**
(43) Date of publication of application: **01.09.2021**
(21) Application number: 20186388.3
(22) Date of filing: 17.07.2020
(51) Int. Cl.: B62D 31/02, B62D 27/02

(54) **VEHICLE BODY CONNECTION STRUCTURE AND VEHICLE**

(30) Priority: 28.02.2020 CN 202010128458
(71) Applicant: Zonson Smart Auto Corporation, Zhuhai, Guangdong 519000 (CN)
(72) Inventor: Yao, Cheng, Zhuhai, Guangdong 519000 (CN); Zhang, Lijiang, Zhuhai, Guangdong 519000 (CN); Liu, Chengyi, Zhuhai, Guangdong (CN); Lan, Pinghui, Zhuhai, Guangdong 519000 (CN); Tang, Zhangming, Zhuhai, Guangdong 519000 (CN)
(74) Representative: Twelmeier Mommer & Partner

(57) **Abstract**

Disclosed is a vehicle body connection structure including: a post; an upper waist beam connected to the post; a lower waist beam positioned below the upper waist beam and connected to the post; a diagonal brace connected to both the post and the lower waist beam. The diagonal brace, the post and the lower waist beam together form an enclosed triangular bracket. With the vehicle body connection structure of the disclosure, the risk of the disengagement of the diagonal brace is greatly reduced, while the structural stability is enhanced. A vehicle is further disclosed.

## Description

### TECHNICAL FIELD

The disclosure relates to the field of vehicle structures, in particular to a vehicle body connection structure and vehicle.

### BACKGROUND

Generally, integral stamping frameworks, as usually used in small vehicles, are not suitable for large vehicles, since challenges arise in the manufacture of the stamping apparatus due to the large size of the stamping pieces for large vehicles. Therefore, lap joint structures formed from a plurality of lapped steel beams are frequently used as the framework for large vehicles, and the outer layer of the framework is covered with skin.

Diagonal braces are generally arranged between the upper and lower waist beams in the lap joint structures of large vehicles, in order to enhance the stability of the bracket. Large shearing forces would be transferred from bottom to top by the framework to the positions where the diagonal brace is fixed to the upper and lower waist beams. These two positions would bear large shearing forces due to the parallel arrangement of the upper and lower waist beams, such that bolts at those positions are subject to breakage causing the disengagement of the diagonal brace.

### SUMMARY

The present disclosure at least solves or alleviates one of the above mention technical problems. In view of this, there is provided a vehicle body connection structure according to the disclosure, for reducing the risk of the disengagement of the diagonal brace while enhancing the structural stability.

In one aspect of the disclosure, there is provided a vehicle body connection structure including: a post; an upper waist beam connected to the post; a lower waist beam positioned below the upper waist beam and connected to the post; a diagonal brace connected to both the post and the lower waist beam. The diagonal brace, the post and the lower waist beam together form an enclosed triangular bracket.

In some embodiments, the post is configured as an I-shaped structure, and one end of the diagonal brace is provided with an insert inserted between two flange plates of the post.

In some embodiments, the insert is in clearance fit with the flange plates, the diagonal brace is provided with a block at a root of the insert.

In some embodiments, distance *a* between the two flange plates of the post and width *b* of the insert satisfy 0.2 mm<*a*-*b*<1 mm.

In some embodiments, the insert is in clearance fit with the flange plates.

In some embodiments, distance *a* between the two flange plates of the post and width *b* of the insert satisfy 0.1 mm<*b*-*a*<0.4 mm.

In some embodiments, the diagonal brace is provided with a block at a root of the insert.

In some embodiments, an inner cover plate is arranged between the upper waist beam and the post.

In some embodiments, the post is configured as a hollow post.

The disclosure further provides a vehicle including the foregoing vehicle body connection structure, further including a skin connected to the body connection structure.

In the vehicle body connection structure of the disclosure, two ends of the diagonal brace are respectively connected to the lower waist beam and the post such that a joint between the diagonal brace and the post mainly bears the pressure from the post when a shearing force is transmitted through the body. With such structure, the risk of the disengagement of the diagonal brace is greatly reduced as compared to the case where the joint mainly bears the shearing force. In addition, the enclosed triangular bracket, as formed by the diagonal brace, the post and the lower waist beam ensures the stability of the position below the bracket near the force bearing portion and reduces the shaking of the bracket of the vehicle body.

Additional aspects and advantages of the disclosure will be partially described in the following detailed description, and some of them will become apparent, or be understood through the practice of the disclosure.

### BRIEF DESCRIPTION OF THE DRAWINGS

Above and/or additional aspects and advantages of the disclosure will become apparent from the following detailed description when considered in conjunction with the annexed drawings, in which:
FIG. 1 is an axial side view of a vehicle body connection structure according to an embodiment of the disclosure;
FIG. 2 is a front view of the vehicle body connection structure according to an embodiment of the disclosure;
FIG. 3 is a cross-sectional view taken along line B-B in FIG. 2;
FIG. 4 is a cross-sectional view taken along line C-C in FIG. 2;
FIG. 5 is a cross-sectional view taken along line A-A in FIG. 2;
FIG. 6 is an axle side view of a vehicle body according to an embodiment of the disclosure.

### List of reference numerals

- 100: Skin
- 110: Post
- 120: Upper waist beam
- 130: lower waist beam
- 140: Diagonal brace
- 141: Insert
- 142: Block
- 150: Inner Cover Plate

### DETAILED DESCRIPTION

Reference will now be made in detail to the embodiments of the present invention, examples of which are illustrated in the accompanying drawings, wherein like reference numerals refer to the same or similar elements or elements having the same or similar functions throughout. The embodiments described below with reference to the accompanying drawings are illustrative only for the purpose of explaining the disclosure and are not to be construed as limiting the disclosure.

In the description of the disclosure, it should be understood that the positional descriptions referred to, for example, the directional or positional relationships indicated by upper, lower, front, rear, left, right, etc., are based on the directional or positional relationships shown in the drawings, and are only for convenience and simplification of description of the disclosure, but not for indicating or implying that the referred device or element must have a specific direction, be constructed and operated in a specific direction, and thus should not be construed as limiting the disclosure.

In the description of the disclosure, "certain" means one or more, "a plurality of' means two or more, and "greater than", "less than", "more than", etc. are understood as excluding the number itself, "above", "below", "within", etc. are understood as including the number itself. "First", "second", etc., if referred to, are for the purpose of distinguishing technical features only, cannot be understood as indicating or implying a relative importance or implicitly indicating the number of technical features indicated or implicitly indicating the precedence of technical features indicated.

In the description of the disclosure, unless otherwise clearly defined, terms such as "arrange", "install", "connect" should be understood in a broad sense, and those skilled in the art can reasonably determine the specific meanings of the above terms in the disclosure by combining the specific contents of the technical solutions.

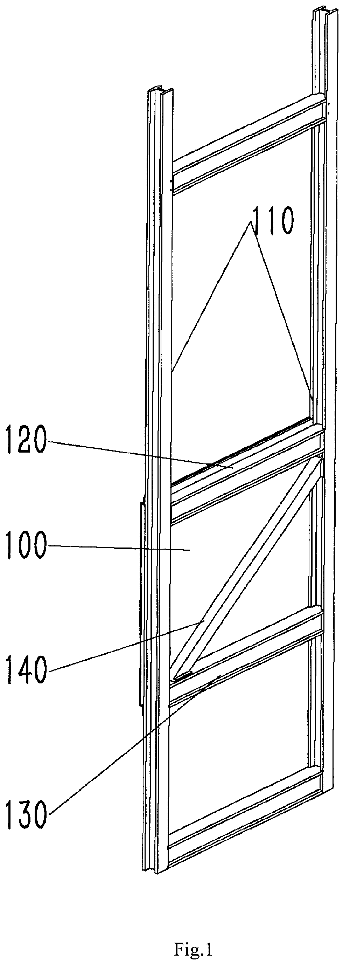

Referring to Figs. 1 to 5, there is provided a vehicle body connection structure including: a post 110; an upper waist beam 120 connected to the post 110; a lower waist beam 130 positioned below the upper waist beam 120 and connected to the post 110; a diagonal brace 140 connected to both the post 110 and the lower waist beam 130. The diagonal brace 140, the post 110 and the lower waist beam 130 together form an enclosed triangular bracket.

In this embodiment, two ends of the diagonal brace are respectively connected to the lower waist beam and the post such that a fixed portion between the diagonal brace and the post mainly bears the pressure from the post when a shearing force is transmitted through the body. With such structure, the risk of the disengagement of the diagonal brace 140 is greatly reduced as compared to the case where the joint mainly bears the shearing force. In addition, the enclosed triangular bracket, as formed by the diagonal brace 140, the post 110 and the lower waist beam 130 ensures the stability of the position below the bracket near the force bearing portion and reduces the shaking of the bracket of the vehicle body.

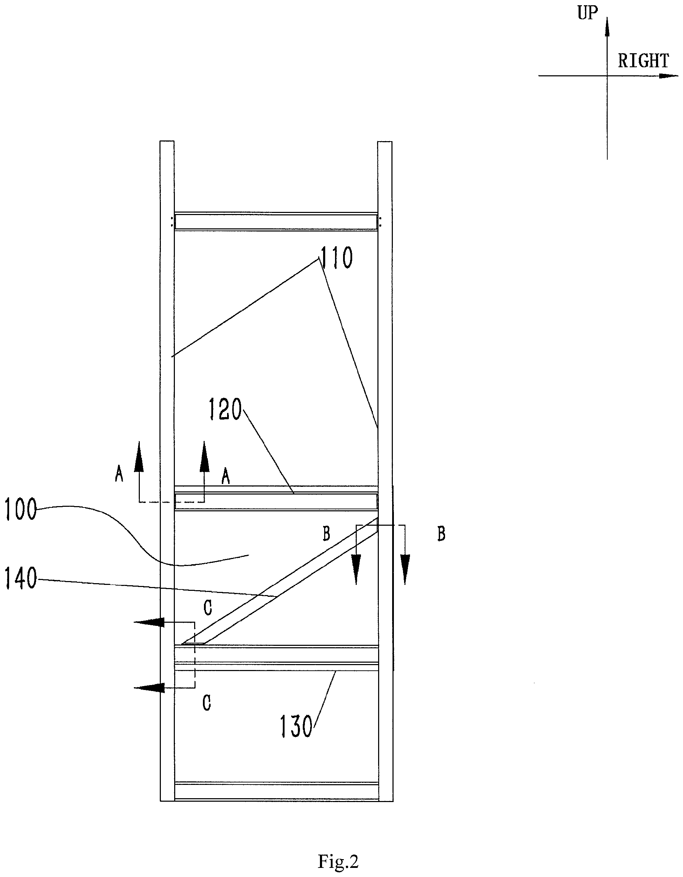

Specifically, in the case that the diagonal brace 140 are fixed to the upper waist beam 120 and the lower waist beam 130, the fixed portions at both ends of the diagonal brace 140 would bear large shearing forces and thus would be subject to failure. While in the case that one end of the diagonal brace 140 is fixed on the post 110 with the other end is fixed on the lower waist beam 130 as shown in FIG. 2, one end of the diagonal brace 140 is bearing a pressing force with the other end bearing a shearing force, which prevents simultaneous failure of both ends which bear the same kind of force.

In particular, the width of the enclosed triangular bracket formed by the diagonal brace 140, the post 110 and the lower waist beam 130 increases from bottom to top, increasing the stability of the lower end of the bracket.

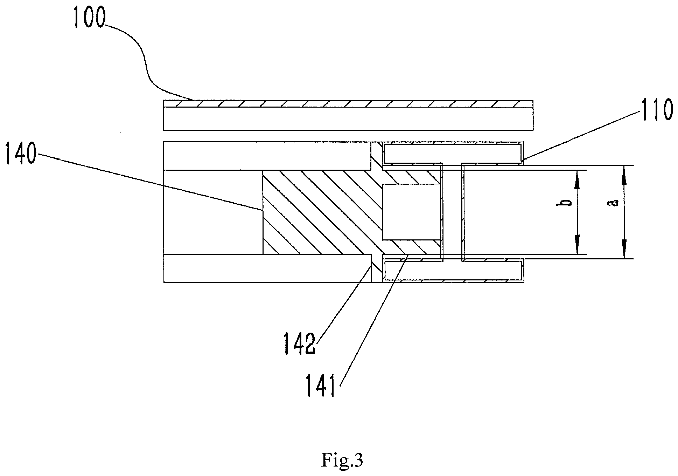

As shown in FIGS. 2 and 3, the post 110 has an I-shaped structure. One end of the diagonal brace 140 is provided with an insert 141 inserted between two flange plates of the post 110. The I-shaped post 110 ensures the bearing performance of the bracket while effectively reduces the use of materials. The two flanges of the post 110 enclosing the insert 141 further enhance the structural stability. The insert 141 and the two flange plates may be fixed in various manners, such as welding, riveting or the like.

Apparently, the diagonal brace 140 and the post 110 may be fixed by installing the two flange plates of the I-shape post of stainless steel in the intermediate space of the insertion part 141.

In some embodiments, in order to facilitate welding of the flange plate and the insert 141, clearance fit is formed between the flange plate and the insert 141, and the diagonal brace 140 is provided with a block 142 at a root of the insert 141. In such configuration, the clearance between the insert 141 and the flange plate facilitates metal solution to sufficiently contact the flange plate and the insert 141 during welding. The block 142 can provide a force for the diagonal brace 140 abutting against the post 110 to ensure stable welding.

In addition, in order to avoid empty welding due to a large welding gap or avoid that solution can not flow due to a small welding gap, the relationship of distance *a* between the two flange plates of the post 110 and the width *b* of the insert 141 satisfies 0.2 mm<*a*-*b*<1 mm. In such configuration, the distance *a* between the two flange plates refers to a distance between inner edges of the two flange plates, and the width b of the insert 141 refers to a distance between outer edges of both sides of the insert 141, where *a* and *b* are matching dimensions.

It should be understood that, the insert 141 may be in interference fit with the flange plates when riveting is applied between the post 110 and the diagonal brace 140, which facilitates a rivet to penetrate the flange plate and the insert 141 and prevents the insert 141 from breaking resulting from the pressing by the rivet, while stabilizes the position of the diagonal brace 140 relative to the post 110 during riveting without additional fixing tool.

Specifically, the insert 141 may be configured as a structure in which two ends are respectively matched with two flange plates with the middle being hollow, to facilitate riveting.

In some embodiments, in order to ensure the stable relative position between the post 110 and the diagonal brace 140 during riveting, and facilitate the assembly of the two and facilitate the insertion of the insert 141 between the two flange plates, the relationship of the distance *a* between the two flange plates of the post 110 and the width b of the insert 141 satisfies 0.1 mm<*b*-*a*<0.4 mm.

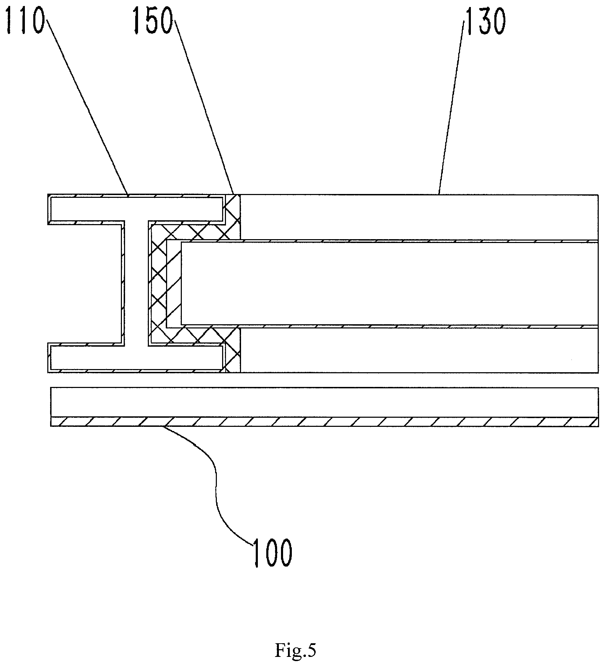

As shown in FIG. 5, in order to facilitate the fixing between the upper waist beam 120 and the post 110, an inner cover plate 150 is arranged between the upper waist beam 120 and the post 110. In addition, another inner cover plate 150 may be arranged between the lower waist beam 120 and the post 110.

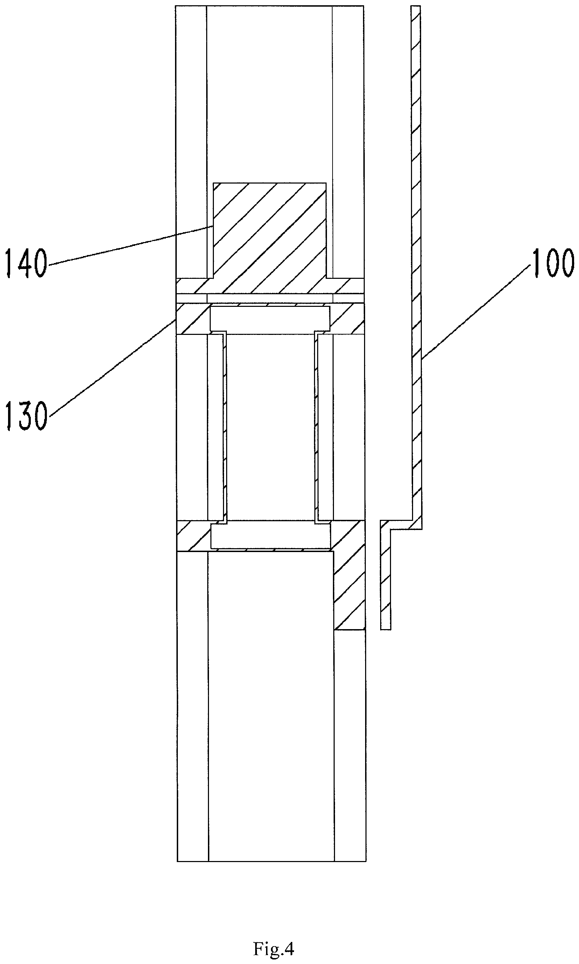

As shown in FIG. 4, welding or riveting may be adopted for fixing of the diagonal brace 140 with the lower waist beam 130. And the diagonal brace 140 and the lower waist beam may be fixed in a structure similar to that for the diagonal brace 140 and the lower waist beam 130.

In order to save the manufacturing materials of the vehicle body structure, the post 110 may be configured as a hollow post.

Wherein, all components of the vehicle body connection structure may be made from aluminum alloy to reduce the weight of the entire vehicle.

The disclosure further provides a vehicle including the above-mentioned vehicle body connection structure, and further including a skin 100 that is connected with the vehicle body connection structure.

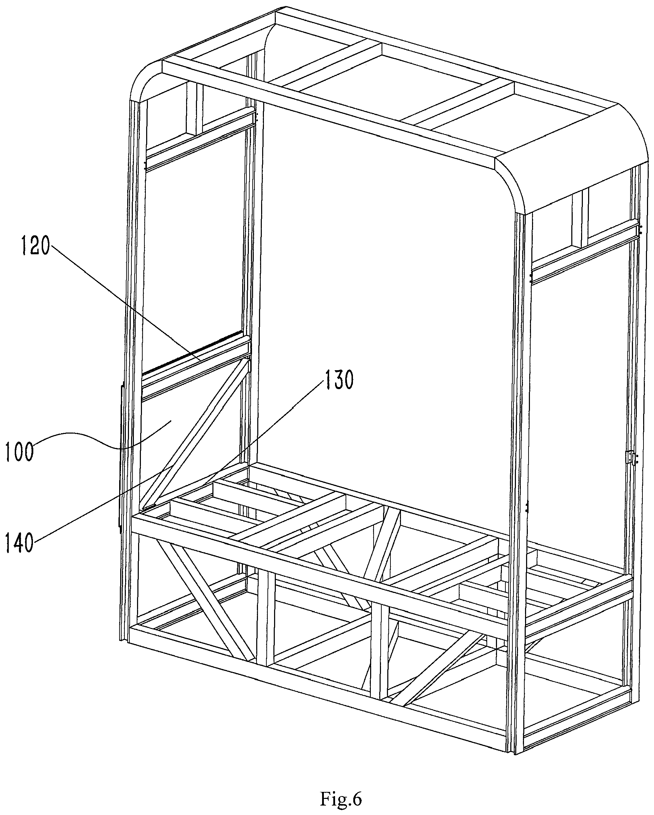

Specifically, as shown in FIG. 4 and FIG. 6, the vehicle body connection structure in this embodiment is configured as a part of the vehicle frame of the entire vehicle, and is positioned below the opening of the window, and skin 100 of the vehicle body is connected on the lower waist beam.

The embodiments of the disclosure have been described in detail with reference to the drawings, but the disclosure is not limited to the above embodiments, and various changes can be made within the knowledge of those skilled in the art without departing from the principle of the disclosure.

## Claims

1. A vehicle body connection structure, comprising:
a post (110);
an upper waist beam (120) connected to the post (110);
a lower waist beam (130) positioned below the upper waist beam (120) and connected to the post (110); and
a diagonal brace (140) connected to both the post (110) and the lower waist beam (130); the diagonal brace (140), the post (110) and the lower waist beam (130) together forming an enclosed triangular bracket.

2. The vehicle body connection structure of claim 1, wherein the post (110) is configured as an I-shaped structure, and one end of the diagonal brace (140) is provided with an insert (141) inserted between two flange plates of the post (110).

3. The vehicle body connection structure of claim 2, wherein the insert (141) is in clearance fit with the flange plates, the diagonal brace (140) is provided with a block (142) at a root of the insert (141).

4. The vehicle body connection structure of claim 3, wherein distance *a* between the two flange plates of the post (110) and width *b* of the insert (141) satisfy 0.2 mm<*a*-*b*<1mm.

5. The vehicle body connection structure of claim 2, wherein the insert (141) is in clearance fit with the flange plates.

6. The vehicle body connection structure of claim 5, distance *a* between the two flange plates of the post (110) and width *b* of the insert (141) satisfy 0.1 mm<*b*-*a*<0.4 mm.

7. The vehicle body connection structure of claim 5, wherein the diagonal brace (140) is provided with a block (142) at a root of the insert (141).

8. The vehicle body connection structure of claim 1, wherein an inner cover plate (150) is arranged between the upper waist beam (120) and the post (110).

9. The vehicle body connection structure of claim 1, wherein the post (110) is configured as a hollow post.

10. A vehicle comprising the vehicle body connection structure of any one of claims 1 to 9, further comprising a skin (100) connected to the body connection structure.
